# EUROPÄISCHE PATENTSCHRIFT

(11) **EP 3 752 757 B1**
(45) Veröffentlichungstag und Bekanntmachung des Hinweises auf die Patenterteilung: **07.06.2023**
(21) Anmeldenummer: 18708921.4
(22) Anmeldetag: 14.02.2018
(51) Int. Cl.: F16K 15/14, F16K 11/02, F16K 11/044

(54) **STRÖMUNGSWEG-UMSCHALTVENTIL**
FLOW PATH SWITCHING VALVE
VANNE D'INVERSION DE TRAJET D'ÉCOULEMENT

(43) Veröffentlichungstag der Anmeldung: 23.12.2020
(73) Patentinhaber: Oetiker Schweiz AG, 8810 Horgen (CH)
(72) Erfinder: MOSER, Pascal, 8135 Langnau am Albis (CH)
(74) Vertreter: Strehl Schübel-Hopf & Partner
(86) Internationale Anmeldenummer: PCT/EP2018/053723
(87) Internationale Veröffentlichungsnummer: WO 2019/158198

(56) Entgegenhaltungen:
- EP-A1- 0 520 212
- CN-A- 102 442 072
- DE-A1- 2 062 116
- US-A- 4 579 138
- US-A1- 2003 221 721

## Beschreibung

### Stand der Technik

Aus DE 10 2012 108 199 A1 ist ein Strömungsweg-Umschaltventil mit einer Ventilkammer mit drei Öffnungen und einem in der Ventilkammer angeordneten Ventilkolben mit einer flexiblen Membran bekannt. Die Membran arbeitet an ihrem Umfang mit einer Inneren Umfangswand der Ventilkammer dichtend zusammen. Der Ventilkolben ist zwischen zwei Endpositionen bewegbar, wobei er in einer ersten Endposition einen Strömungsweg zwischen einer ersten und einer zweiten Öffnung freigibt und die dritten Öffnung sperrt und in der zweiten Endposition die erste Öffnung sperrt und einen Strömungsweg zwischen der zweiten und der dritten Öffnung freigibt.

Derartige Umschaltventile werden beispielsweise so eingesetzt, dass bei Eintritt von Luft durch die erste Öffnung der Ventilkolben durch Überdruck in die erste Endposition geschoben wird und die dritte Öffnung sperrt, während das Strömungsmittel von der ersten Öffnung an der flexiblen Membran vorbei zu der zweiten Öffnung strömen kann. Wird das Strömungsmittel abgeschaltet oder sein Druck verringert, so wird der Ventilkolben durch den dann höheren Druck an der zweiten Öffnung in seine zweite Endposition geschoben, da die Membran nun dichtend wirkt. In der zweiten Endposition ist die erste Öffnung gesperrt, und die Luft kann über die nun offene dritte Öffnung entweichen. Bei entsprechend großem Querschnitt der dritten Öffnung bewirkt das Ventil in dieser Position eine Schnellentlüftung.

Steht der Ventilkolben in der ersten Endposition, so muss die Luft an der Membran vorbei strömen. Dies erfordert einen bestimmten konstanten Druck, um die Membran elastisch zu verformen, Dieser Druckverlust führt zu einer messbaren Hysterese zwischen der ersten und der zweiten Öffnung der Ventilkammer. Da der Druckverlust von Toleranzen in den Dimensionen und in der Werkstoffhärte abhängt, fällt er bei jedem Bauteil etwas anders aus. Außerdem ändert er sich mit der Zeit infolge Materialermüdung und Verschleiß. Die Elastizität der Membran ist aber für die Funktion des Ventils notwendig.

Infolge dieses Effektes wird in einem Druckregelkreis der gewünschte Druck nie exakt erreicht. Wird der Druck stromabwärts von dem Umschaltventil erfasst, so wird der Regelkreis aufgrund der eine zusätzliche Störgröße darstellenden Hysterese langsamer und die Ansprechzeit länger.

Ein Ventil mit den Merkmalen des Oberbegriffs des Patentanspruchs 1 ist in EP 0520 212 A1 definiert. Weitere dem Ventil der vorliegenden Erfindung ähnliche Ventilkonfiguration sind in US 2003/221721 A1, US 4 579 138 A, CN 102 442 072 A und DE 20 62 116 A1 offenbart.

### Abriss der Erfindung

Der Erfindung liegt die Aufgabe zugrunde, ein Strömungsweg-Umschaltventil zu schaffen, bei dem die beschriebene Hysterese beseitigt ist. Das Strömungsweg-Umschaltventil der Erfindung ist in Patentanspruch 1 definiert.

Gemäß der Erfindung ist die innere Umfangswand der Ventilkammer so gestaltet, dass die dichtende Anlage der Membran an der Umfangswand in einem letzten Abschnitt der Membranbewegung in die erste Endposition in mindestens einem Teil des Umfangs aufgehoben ist. Mit anderen Worten sieht die Erfindung am Ventilkolben einen Bypass vor, der bei Erreichen der genannten ersten Endposition des Ventilkolbens wirksam wird. In dieser Endposition ist der Einfluss der elastischen Membran ausgeschaltet und dadurch die beschriebene Hysterese unterdrückt, ohne dass sich die grundsätzliche Funktion des Umschaltventils ändert. Verschleiß und Toleranzen an der Membran haben keinen Einfluss auf die Ventilfunktion. Gleichzeitig ist der Strömungsquerschnitt vergrößert. Wegen der unterdrückten Hysterese ist das erfindungsgemäße Umschaltventil schneller und einfacher zu regeln.

### Zeichnungen

Die Erfindung wird nachstehend anhand von in den Zeichnungen dargestellten Ausführungsbeispielen näher erläutert. In den Zeichnungen zeigen:
Fig. 1 einen Schnitt durch ein Schnellentlüftungsventil,
Fig. 2 einen vergrößerten Schnitt durch die Ventilkammer und den darin angeordneten Ventilkolben
Fig. 3 bis 8 Schnitte durch eine Hälfte von Ventilkammer und Ventilkolben in alternativen (nicht unbedingt beanspruchten) Gestaltungen und
Fig. 9 (a) bis (d) schematische Schnittdarstellungen einer in der Umfangswand der Ventilkammer angeordneten Rille in verschiedenen Querschnittsformen (nicht beansprucht).

### Ausführungsbeispiele

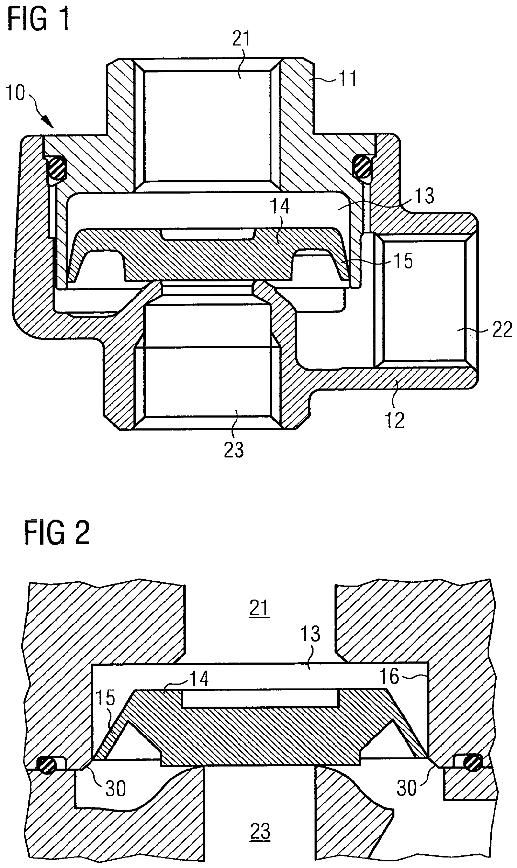

Das in Fig. 1 dargestellte Schnellentlüftungsventil weist ein Gehäuse **10** auf, das in dem gezeigten Beispiel aus zwei über einen O-Ring dicht miteinander verbundenen Gehäuseteilen **11** und **12** aufgebaut ist. In dem Gehäuseteil **11** ist eine Ventilkammer **13** ausgebildet, in der ein Kunststoff-Kolben **14** mit einer flexiblen Membran **15** in gemäß Fig. 1 senkrechter Richtung verschiebbar ist.

Die Ventilkammer **13** weist In dem oberen Gehäuseteil **11** eine erste Öffnung **21** zum Anschluss an eine (nicht gezeigte) Druckluftquelle und in dem unteren Gehäuseteil **12** eine seitlich angeordnete zweite Öffnung **22** zum Anschluss an einen (nicht gezeigten) Druckluftzylinder oder Ähnliches und eine untere dritte Öffnung **23** als Schnellablass in die Atmosphäre auf.

Der Ventilkolben **14** ist zwischen der dargestellten ersten Endposition, in der er die dritte Öffnung **23** verschließt, und einer (in Fig. 1 nicht dargestellten) zweiten Endposition verschiebbar, in der er an der oberen Wand der Ventilkammer **13** anliegt und die erste Öffnung **21** verschließt. In der ersten Endposition wird der Ventilkolben **14** durch den an der ersten Öffnung **21** herrschenden Überdruck gehalten.

Bei Ventilen nach dem Stand der Technik kann in dieser Stellung Luft an der flexiblen Membran **15** vorbei strömen und zu dem an die Öffnung **22** angeschlossenen Zylinder gelangen.

Wird der Druck an der Öffnung **21** unter den an der Öffnung **22** abgesenkt, so wird der Ventilkolben **14** in die (nicht gezeigte) zweite Endposition geschoben, in der er ein Ausströmen durch die Öffnung **21** verhindert, während die Luft von der mit dem Zylinder verbundenen Öffnung **22** durch die größere Öffnung **23** schnell an die Atmosphäre entweichen kann.

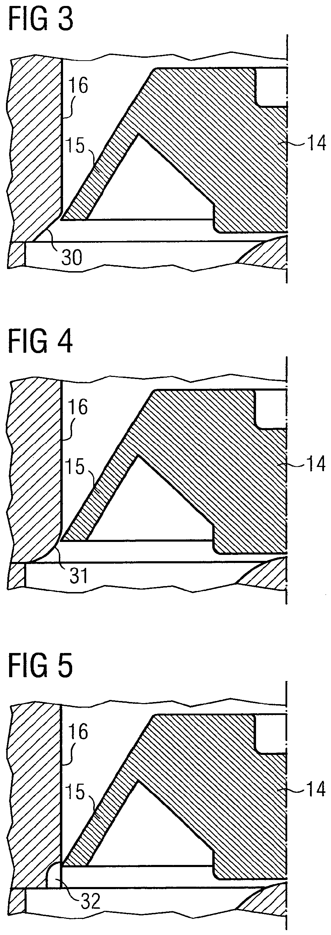

Bei der in Fig. 2 und 3 veranschaulichten Ausgestaltung der Erfindung ist die untere Kante der Ventilkammer-Umfangswand **16** mit einer Fase **30** versehen, die so angeordnet ist, dass die Membran **15** des Ventilkolbens **14** bei Erreichen der ersten Endposition in Abstand von der Umfangswand **16** gelangt und eine Bypass-Verbindung zwischen der ersten Öffnung **21** und der zweiten Öffnung **22** freigibt. Dadurch wird die beim Stand der Technik vorhandene Hysterese unterdrückt.

Die Membran **15** ist verhältnismäßig steif. Der Ventilkolben **14** hat beinahe keine Reibung und wird bereits bei kleinsten Drücken verschoben. Erreicht er den Bypass, kann die Luft ohne Druckverlust und daher ohne Hysterese an der Membran **15** vorbei strömen. Beim Stand der Technik muss dagegen immer die Widerstandskraft der Membran überwunden werden.

In der nicht beanspruchten Ausgestaltung nach Fig. 4 ist der Bypass als Radius 31 ausgebildet, der an der Stelle beginnt, an der sich die Membran **15** kurz vor Erreichen der ersten Endposition befindet. Auch hier liegt die Membran In der Endposition nicht mehr dichtend an der Umfangswand **16** der Ventilkammer **13** an. Ein Vorteil dieser Gestaltung besteht in der gleichmäßigen Druckentlastung der Membran **15** und die auch hier erreichte große Querschnittsfläche für die Luftströmung. Im Vergleich zu der Fase **30** nach Fig, 2 und 3 bildet der Radius **31** einen sanfteren Übergang, was zur Lebensdauer des Ventils beiträgt.

In Fig. 5 ist der Bypass als Rille **32** in der Ventilkammer-Umfangswand **16** gestaltet (nicht beansprucht). Es können auch mehrere parallele Rillen oder Ringnuten vorgesehen werden, die so angeordnet sein, dass die Membran **15** erst kurz vor Erreichen der ersten Endposition nicht mehr an der Umfangswand **16** anliegt.

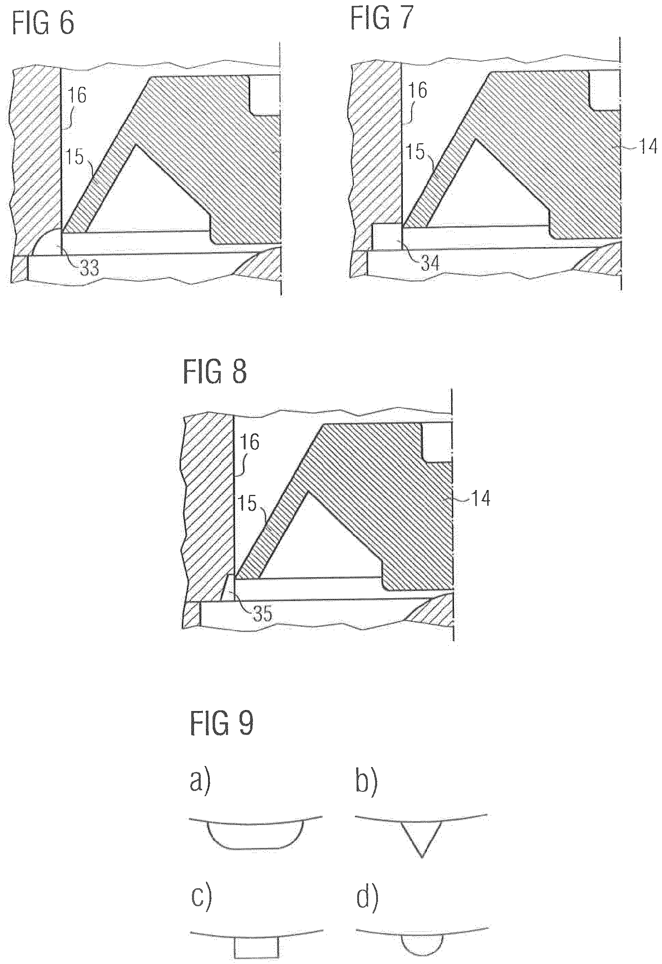

In den nicht beanspruchten Ausführungen nach Fig. 6 bis 8 sind am unteren Ende der Ventilkammer-Umfangswand **16** über den Umfang verteilt mehrere Kerben **33, 34** oder **35** ausgebildet, die jeweils nur über einen Teil des Umfangs verlaufen und wiederum an der Stelle liegen, die die Membran **15** kurz vor der ersten Endposition erreicht. Alternativ kann am Umfang eine einzige Kerbe **33, 34** oder **35** vorhanden sein. Im Axialschnitt können die Kerben teilkreisförmig (**33** in Fig. 6), rechteckig (**34** in Fig. 7), trapezförmig (**35** in Fig. 8) sein oder anders geformt sein.

Wie in Fig. 9 angedeutet, können diese Kerben **33...35** im Querschnitt beispielsweise wannenförmig (a), keilförmig (b), rechteckig (c) oder halbkreisförmig (d) sein.

### Bezugszeichen

- **10**: Gehäuse
- **11, 12**: Gehäuseteile
- **13**: Ventilkammer
- **14**: Ventilkolben
- **15**: Membran
- **16**: Umfangswand
- **21**: Erste Öffnung
- **22**: Zweite Öffnung
- **23**: Dritte Öffnung
- **30**: Fase
- **31**: Radius
- **32**: Rille
- **33...35**: Kerbe

## Patentansprüche

1. Strömungsweg-Umschaltventil mit einer Ventilkammer (**13**) mit drei Öffnungen (**21**, **22, 23**) und einem in der Ventilkammer angeordneten Ventilkolben (**14**), der eine an ihrem Umfang mit einer inneren Umfangswand (**16**) der Ventilkammer (**13**) dichtend zusammenarbeitende elastische Membran (**15**) aufweist und zwischen zwei Endpositionen bewegbar ist, wobei der Ventilkolben (**14**) in einer ersten Endposition einen Strömungsweg zwischen einer ersten Öffnung (**21**) und einer zweiten Öffnung (**22**) freigibt und die dritten Öffnung (**23**) sperrt und in der zweiten Endposition die erste Öffnung (**21**) sperrt und einen Strömungsweg zwischen der zweiten Öffnung (**22**) und der dritten Öffnung (**23**) freigibt,
**gekennzeichnet dadurch, dass** die innere Umfangswand (**16**) der Ventilkammer (**13**) in einem Abschnitt, der dem letzten Abschnitt der Membranbewegung entspricht, konisch erweitert ist, wodurch die dichtende Anlage der Membran (**15**) an der Umfangswand (**16**) erst in diesem letzten Abschnitt der Membranbewegung in die erste Endposition in mindestens einem Teil des Umfangs aufgehoben ist.

## Claims

1. A flow path switching valve having a valve chamber (13) with three openings (21, 22, 23) and a valve piston (14) having a flexible diaphragm (15) cooperating at its circumference sealingly with an inner circumferential wall (16) of the valve chamber (13) and being movable between two end positions, wherein the valve piston (14) in a first end position opens a flow path between a first opening (21) and a second opening (22) and blocks a third opening (23) and in the second end position blocks the first opening (21) and opens a flow path between the second opening (22) and the third opening (23).
**characterized in that** the circumferential wall (16) of the valve chamber (13) is enlarged conically in a portion corresponding to the last phase of the diaphragm movement, whereby the sealing contact between the diaphragm (15) and the circumferential wall (16) is released only in this last phase of the diaphragm movement in at least part of the circumference.

## Revendications

1. Vanne d'inversion de trajet d'écoulement comprenant une chambre de vanne (13) avec trois ouvertures (21, 22, 23) et un piston de vanne (14) disposé dans la chambre de vanne qui présente une membrane (15) élastique coopérant en étanchéité sur son pourtour avec une paroi périphérique intérieure (16) de la chambre de vanne (13), et est mobile entre deux positions d'extrémité, dans lequel le piston de vanne (14), dans une première position d'extrémité, libère un trajet d'écoulement entre une première ouverture (21) et une deuxième ouverture (22) et bloque la troisième ouverture (23) et, dans la deuxième position d'extrémité, bloque la première ouverture (21) et libère un trajet d'écoulement entre la deuxième ouverture (22) et la troisième ouverture (23), **caractérisé en ce que** la paroi périphérique intérieure (16) de la chambre de vanne (13) est élargie coniquement dans un tronçon qui correspond au dernier tronçon du mouvement de la membrane, ce par quoi la position en étanchéité de la membrane (15) contre la paroi périphérique (16) est annulée dans au moins une partie du pourtour dans la première position d'extrémité, uniquement dans ce dernier tronçon de mouvement de la membrane.
